## Europäisches Patentamt
## European Patent Office
## Office européen des brevets

(19)

(11) Veröffentlichungsnummer: **0 088 397**
**A2**

(12) # EUROPÄISCHE PATENTANMELDUNG

(21) Anmeldenummer: **83102141.5**

(51) Int. Cl.³: **C 12 C 9/04**, C 12 C 9/06

(22) Anmeldetag: **04.03.83**

(30) Priorität: **05.03.82 DE 3208022**

(71) Anmelder: **Raible, Karl, Dr., Guardinistrasse 3, D-8000 München 70 (DE)**

(43) Veröffentlichungstag der Anmeldung: **14.09.83 Patentblatt 83/37**

(72) Erfinder: **Raible, Karl, Dr., Guardinistrasse 3, D-8000 München 70 (DE)**

(74) Vertreter: **Lorenz, Eduard et al, Rechtsanwälte Lorenz, Eduard - Seidler, Bernhard Seidler, Margrit - Gossel, Hans-K. Philipps, Ina, Dr. Widenmayerstrasse 23, D-8000 München 22 (DE)**

(84) Benannte Vertragsstaaten: **AT BE CH FR GB IT LI LU NL SE**

(54) **Verfahren zur Behandlung von Bier.**

(57) Die Erfindung bezieht sich auf ein Verfahren zur Behandlung von Bier mit Kieselsol. Zur Lösung der Aufgabe, ein bekanntes Verfahren dieser Art derart zu verbessern, dass der Klärprozeß wirksamer und wirtschaftlicher gestaltet wird, mit der Möglichkeit, den Brauprozeß zu verkürzen, indem die Filtrations- sowie Separationseigenschaften des späteren Bieres verbessert werden, gibt man erfindungsgemäss das Kieselsol der Würze zu und trennt von der dadurch verursachten Ausflockung die Würze oder das Jungbier ab.

EP 0 088 397 A2

ACTORUM AG

COMPLETE DOCUMENT

# BESCHREIBUNG

Die Erfindung bezieht sich auf ein Verfahren zur Behandlung von Bier mit Kieselsol.

Kieselsole sind kolloidale Lösungen von Siliciumdioxyd in Wasser. Sie sind im Handel erhältlich, gewöhnlich in 30 %iger Konzentration (Gew.%). Das Siliciumdioxyd liegt in Form von dichten, unvernetzten und an der Oberfläche hydroxylierten Kügelchen vor. Die Größe dieser Kügelchen läßt sich durch die Herstellungsbedingungen etwa zwischen 2 und 100 nm einstellen. Hieraus läßt sich eine spezifische Oberfläche einer Kieselsollösung berechnen, die zwischen 50 und 600 $m^2$/g $SiO_2$ nach BET betragen kann. Je größer die Kügelchen, desto geringer ist die spezifische Oberfläche. Solche Lösungen lassen sich aber bis auf 60 %, u.U. sogar noch etwas mehr, $SiO_2$-Gehalt bringen. Sie enthalten dann mehr $SiO_2$ als die aus der DE-PS 17 67 324 bekannten Kieselsäurehydrogele für die Bierstabilisierung. Kieselsollösungen mit geringerer Partikelgröße und höherer spezifischer Oberfläche sind u.U. nur bis zu 15 % $SiO_2$ oder gar weniger als stabile Sole haltbar.

Je geringer die Teilchengröße und je größer die Oberfläche, desto wirksamer sind Kieselsole für die Getränkebehandlung. Mit Rücksicht auf die Abnahme des $SiO_2$-Gehaltes bei höherer Oberfläche haben sich praktisch Sole mit 200 bis 350 $m^2$/g Oberfläche für die Getränkeschönung eingeführt.

Mit dem Fachausdruck "Schönen" bezeichnet man in der Kellersprache die Klärung von Getränken durch Zusatz bestimmter

Stoffe. Die Schönung dient in der Fruchtsaft- und Weinindustrie der Korrektur der Getränke und zwar der letztmaligen Korrektur der zum Konsum fertigen Getränke hinsichtlich Farbe, Geschmack und Geruch, vor der Filtration
und Abfüllung. Weiterhin sollen durch den Schönungsprozeß
Trübungsstoffe aus den Getränken weitgehend beseitigt werden, damit die zumeist üblichen Masse- oder Schichtenfilter
nicht schon nach kurzer Filtrationszeit durch diese Trübungsstoffe angefüllt und undurchlässig gemacht werden. Der Schönungsprozeß hat also in der Fruchtsaft- und Weinindustrie
auch noch die Aufgabe eines Stabilisierungsvorganges erhalten, der dazu dient, solche Stoffe aus den Getränken zu entfernen, die im abgefüllten Gebinde Nachtrübungen verursachen
könnten.

In der Fruchtsaft- und Weinindustrie dürfen nach dem Deutschen Weingesetz von 1971 als Schönungsmittel von Traubenmost, Wein oder den weinähnlichen Getränken eine ganze Anzahl von chemischen Substanzen eingesetzt werden (Vogt/Jakob/Lemperle/Weiss: Der Wein, Verlag Eugen Ulmer Stuttgart,
1979). Dazu gehört auch Kieselsol, daß im allgemeinen in
einer Menge von 50 bis 100 ml in 30 %iger Lösung pro hl
Wein, zumeist zusammen mit 1 bis 10 g Gelatine pro hl, eingesetzt wird.

Schönungsvorgänge sind auch in gewissem Umfang in der Brauereiindustrie gebräuchlich, obwohl man das Wort "Schönung"
für solche Prozesse nicht verwendet. Es geht aber bei diesen
Prozessen ebenfalls darum, das Bier vor der Filtration und
Abfüllung qualitativ zu korrigieren, z.B. hinsichtlich Farbe, und vor allem hinsichtlich der Eiweißstabilität. Schönungs- und Klärmittel, die im Brauereigewerbe eingesetzt
werden, sind z.B. Hausenblase, die nach dem Deutschen Biersteuergesetz bei obergärigem Bier zulässig ist. Im englischen
Sprachbereich spricht man von "finings". Die Hausenblase
(Fischleim) wird z.B. dem Weizenbier vor dem Abfüllen in Flaschen beigefügt. Der Fischleim hat dann die Aufgabe,
nach erfolgter Gärung in den Flaschen die Hefe und andere
Trubstoffe zu einem kompakten Sediment auf dem Flaschenboden zu sedimentieren, bei gleichzeitiger Klärung des überstehenden Bieres.

Einen Schönungsvorgang stellt auch die Bentonitbehandlung
des Bieres zur Eiweißstabilisierung dar. Hier wird eine Bentonitsuspension dem Bier beigefügt. Nach mehrtägiger Reaktion und Sedimentation wird das Bier vom Bentonitsediment
getrennt, filtriert und abgefüllt.

In der Brauereipraxis verlieren aber Schönungsprozesse,
wie z.B. das Bentonitverfahren, mehr und mehr an Bedeutung.
Es liegt dies vor allem daran, daß der Schönungsprozeß
einen eigenen Arbeitsgang darstellt, der zudem auch noch
mit Bier- und Kohlensäureverlusten, der Gefahr der Sauerstoffaufnahme des Bieres etc., behaftet ist. Es kommen
hinzu die Kosten, die durch die unvermeidlichen Bierverluste entstehen, bzw. dadurch, daß das Bier aus den Klämittelsedimenten nur unter gewissem Aufwand zurückzugewinnen ist. Da der technologische Effekt, nämlich die Entfernung von Eiweißstoffen aus dem Bier, die zu Nachtrübungen führen könnten, mit Hilfe moderner Methoden, z.B. Kieselgel als Xerogel oder Hydrogel und/oder wasserunlöslichem
Polyvinylpyrrolidon (PVPP), bei der abschließenden Filtration genauso, zumeist sogar sicherer eintritt und diese zudem technisch einfacher zu handhaben sind, müssen Schönungsprozesse an Bedeutung verlieren. Es kommt hinzu, daß die
Trubentfernung vor der Filtration zur Entlastung der Filterschichten oder Filtermasse ebenfalls an Bedeutung verliert,
weil man bei moderner Anschwemmfiltration durch Auswahl geeigneter Kieselguren und enptsprechender Dosierung weiten
Spielraum zur Anpassung an die jeweiligen Erdordernisse besitzt.

Von praktischer Bedeutung in der Brauereiindustrie können Schönungs- und Klärungsprozesse aber dann sein, wenn sie die Filtrationseigenschaften eines Bieres zu verbessern helfen. Hierbei geht es aber nicht darum, Trubstoffe aus dem Bier zu entfernen, sondern Kolloide, deren Anwesenheit im Bier sich zumeist erst bei der Filtration zu erkennen gibt. Man weiß inzwischen, daß solche filtrationsbestimmten Kolloide aus Beta-Glukanen aufgebaut sein können, doch sind auch proteinische Kolloide, aber auch Kolloide, die sowohl aus Proteinen als auch Kohlehydrat-Makromolekülen bestehen, als Ursache für Filtrationsstörungen nicht auszuschließen. Gewisse Schlüsse auf die Anwesenheit solcher filtrationshemmenden Kolloide im Bier sind durch Labormethoden, wie z.B. die von Esser (Monatsschrift für Brauerei, 25, 145 (1972)) möglich.

Die großtechnische Bedeutung einer Verbesserung der Filtrationseigenschaften von Bier ergibt sich aus der modernen Tendenz zur Abkürzung des Brauprozesses und zur Entwicklung von großen Betriebseinheiten, die selbstverständlich kostengünstiger produzieren können als kleine Brauereien. In diesen großen Betriebseinheiten wird das Bier dann auch in großen Tanks gelagert, häufig in zylindrokonischen Tanks bis zu 20 Meter Höhe. Hier bringt die Klärung des Bieres zwischen Hauptgärung und Abfüllung allein schon wegen der Tankhöhe besondere Probleme mit sich. Zwar kann man durch Anwendung von z.B. Separatoren die natürlichen Sedimentationsprozesse ersetzen, die Filtrationseigenschaften des Bieres aber, die ganu wesentlich von der kolloidalen Situation bestimmt werden, lassen sich durch Separatoren nicht oder nur sehr schwer verbessern. Es kommt deswegen gerade bei großen Brauereien ganz besonders auf die Erzielung gut filtrierbaren Bieres an, um sich den ungestörten Betriebsablauf durch Einhaltung eines hohen Filterdurchsatzes zu sichern und auch, um den Verbrauch an Filterhilfsmitteln in Grenzen zu halten und die Produktionskontinuität uneingeschränkt zu erhalten.

Für die Filtrationseigenschaften eines Bieres ist zumeist gar nicht so sehr der Klarheitsgrad des Bieres vor der Filtration bestimmend, vielmehr spielt der Kolloidgehalt des Bieres eine Rolle, z.B. der Gehalt an Beta-Glukanen oder auch proteinischen Kolloiden.

Ein Verfahren zur Behandlung von Bier mit Kieselsol ist aus der DE-OS 21 33 906 bekannt. Das Kieselsol wird dem Bier vorzugsweise während oder bei Beginn der Lagerzeit bei Temperaturen unter 20° C zugegeben. Mit diesem Verfahren wird eine Lösung des bis dahin mit Hilfe von Bentoniten oder Kieselgelen angegangenen Problems erstrebt, die im Bier vorhandenen, eine spätere Instabilität verursachenden Proteinverbindungen zu absorbieren und zu sedimentieren. Das Verfahren hat sich aber nicht einführen können, weil, wie schon eingangs erwähnt, der ganze Aufwand für den Schönungsprozeß größer und teurer ist als z.B. die Stabilisierung des Bieres durch Kieselgel oder PVPP bei der abschließenden Filtration. Eine Verbesserung der Filtrationseigenschaften des Bieres ist in der Druckschrift nicht offenbart und stellt sich, wie die nachfolgenden Beispiele zeigen, in nennenswertem Umfang auch nicht ein. Es kommt hinzu, daß die Zugabe von Kieselsol zum Bier zu Beginn der Lagerung die einzige technisch einfache Möglichkeit ist, die aber deswegen nicht gerne ausgeführt wird, weil man befürchtet, durch den Klärprozeß die für die Nachgärung erforderliche Hefetätigkeit zu stören oder gar zu unterbinden.

Aus der DE-OS 24 08 896 ist ein Verfahren zur Klärung von Getränken oder deren Vorprodukten in unvergorenem, teilvergorenem oder vergorenem Zustand mit einem mit Aluminiumverbindungen modifizierten Kieselsol und gegebenenfalls Gelatine bekannt. Hier handelt es sich um eine Verbesserung der an sich in der Kellerindustrie für Weine gebräuchlichen Kieselsol-Schönung, die der Korrektur der Weine oder Fruchtsäfte vor der abschließenden Filtration und Abfüllung dient.

Wegen der Verschiedenartigkeit der chemischen Zusammensetzung von Wein und Bier (z.B. pH, $CO_2$-Gehalt, Protein- und Kohlehydraturprung) und auch der verschiedenen Qualitätskriterien, (z.B. Schaum und Einweißstabilität beim Bier gegenüber Weinsteinstabilität beim Wein) haben sich für die Bier- bzw. Weinklärung völlig unterschiedliche Klärtechniken entwickelt.

Vor diesem Hintergrund konnte der mit der Bierklärung befaßte Fachmann aus der Weintechnologie keine Anregung entnehmen.

Die DE-OS 24 o8 896 ist zwar gemäß Patentanspruch auf vergorene Getränke allgemein gerichtet, in der Beschreibung und insbesondere in den Beispielen ist jedoch eindeutig nur der Weinfachmann angesprochen; die Aufgabenstellung bezieht sich dort nämlich auf eine Verbesserung der nur bei der Weinherstellung üblichen Gelatine-Kieselsol-Schönung.

Schließlich offenbart die US-PS 3 818 111 ein Verfahren für die Bierbehandlung zwecks Klärung und Kältestabilisierung, bei dem wässrige, kolloidale Lösungen von Gelatine, N-Vinylpyrrolidon und Polymeren von N-Vinylpyrrolidon sowie Polykieselsäure eingesetzt werden, wobei unter letzteren auch Kieselsäurehydrosol und stabilisiertes Kieselsäurehydrosol verstanden werden. An diesem Verfahren ist aber ungeklärt, ob und in welchem Grad das zum Bier kommende Kieselsol mit der gebildeten Flockung die Gelatine oder das Polyvinylpyrrolidon wieder aus dem Bier ausscheidet. Es ist nicht sichergestellt, daß dies vollständig der Fall ist. Man weiß nämlich beispielsweise von der Weinschönung mit Kieselsol und Gelatine, daß je nach Weinzusammensetzung, aber auch den Bedingungen des Verfahrens, bis zu 30% Gelatine im Getränk verbleiben können, sofern man dieses nicht zusätzlich auch noch

- 7a -

z.B. mit Bentonit behandelt. Hier wird also das weitgehend fertige Bier und nicht die Würze mit Kieselsol
behandelt.

Der Erfindung liegt die Aufgabe zugrunde, das bekannte
Verfahren zur Behandlung von Bier mit Kieselsol derart
zu verbessern, daß der Klärprozeß wirksamer und wirtschaftlich gestaltet wird, mit der Möglichkeit, den
Brauprozeß zu verkürzen, indem die Filtrations- sowie
Separationseigenschaften des späteren Bieres verbessert
werden.

- 8 -

- 8 -

Die Lösung der gestellten Aufgabe erfolgt durch die
kennzeichnenden Merkmale des Patentanspruchs 1. Es
kommt dabei nur darauf an, daß Kieselsol mit der
Würze gut zu vermischen und durch Rühren, Einblasen
von Luft oder Kohlensäuregas ect. die sich rasch ausbildende Trübung solange in der Würze in Schwebe zu
halten, bis sich eine Flockung auszubilden beginnt.
Die Vorteile dieses erfindungsgemäßen Verfahrens sind
eine Beschleunigung der Hauptgärung, eine Beschleunigung des Diacethylabbaus nach der Hauptgärung, eine
Farbaufhellung des Bieres, eine Verbesserung der Filtrationseigenschaften des Bieres, eine Verbesserung
der Separationseigenschaften des Bieres und schließlich eine Erhöhung der Eiweißstabilität des fertigen
Bieres.

Wenn die Zugabe des Kieselsols zu Beginn der Hauptgärung
erfolgt, kann man nach Beendigung der Hauptgärung das
Jungbier in gewohnter Weise von der Hefe trennen. Der Vorteil dieser Alternative liegt darin, daß das Bier und
damit die Kieselsäureausföllung durch die Hefetätigkeit
ständig in Bewegung gehalten ist. Der Niederschlag kann,
wie bereits erwähnt, mit der Oberhefe aus dem Gärbottich
oder mit dem Geläger aus dem Lagertank entfernt und
verfüttert werden. Überraschenderweise wurde gefunden, daß
die Anwesenheit von Kieselsol bei der Hauptgärung nicht
zu einer Störung des Garungsablaufes, sondern vielmehr
zu einer Beschleunigung der Gärung führt. Nach Beendigung der
Hauptgärung setzt sich die Hefe wie gewohnt am Boden des
Gärbottichs als einheitliche Hefeschicht ab und darüber
eine dünne und leicht abtrennbare Schicht von Kieselsolniederschlag, vermischt mit Hefe und Trub. Die Kernhefe,
die zur Weiterführung in der Brauerei bestimmt ist, läßt sich
ohne besondere Maßnahmen gewinnen. Die Oberhefe, in der
sich auch der Kieselsolniederschlag befindet, wird ohnehin
als Viehfutter weggegeben, nachdem man das Bier daraus gewonnen hat.

- 9 -

BAD ORIGINAL

Bei dieser Variante kommt die sich aus Kieselsol bildende Flockung durch die Würze- bzw. Bierzirkulation in Folge der Gärung in besonders innigen Kontakt mit dem Bier und seinen Inhaltsstoffen. Ein besonderer, mechanischer Rührprozeß wird dadurch überflüssig.
Das vergorene Jungbier ist je nach eingesetzter Kieselsolmenge weitgehend befreit von filtrationshemmenden
Kolloiden. Es erfährt auch eine gewisse Farbaufhellung
und Eiweißstabilisierung.

Gemäß einer weiteren Alternative der Erfindung kann die Zugabe
des Kieselsols auch schon zur heißen Würze erfolgen, z.B.
beim Ausschlagen oder in den Whirl-Pool. In diesem Fall
setzt sich die sich ausbildende Flockung zusammen mit
dem Heißtrub im Ausschlaggefäß ab, wo sie durch Sedimentation oder durch Zentrifugation von der Würze abgetrennt
werden kann. Diese Abscheidung des Kieselsolsedimentes
braucht gar nicht quantitativ zu sein, weil durch in der
Würze verbleibende Reste die Gärung angeregt wird. Weitere Vorteile bestehen darin, daß der Kieselsolniederschlag mit dem Heißtrub gut aus der Brauerei zu entfernen ist, daß die Wirksamkeit besser zu kontrollieren ist
und daß schon zu Beginn des Brauprozesses Analysen gemacht
und gegebenenfalls Korrekturen des Brauprozesses veranlaßt werden können.

Eine vorteilhafte Ausführungsform ist Gegenstand des
Anspruchs 3. Diese Ausführungsform vermittelt ein Optimum

hinsichtlich der Wirksamkeit und der $SiO_2$-Konzentration der haltbaren Lösung.

Für die Behandlung der Würze, sowohl im heißen als auch im abgekühlten Zustand, bzw. bei Beginn der Gärung, benötigt man zwischen 10 und 100 g $SiO_2$ pro hl in Form von Kieselsol. Meist sollten aber 25 g $SiO_2$ pro hl schon ausreichen, um den gewünschten Erfolg zu erzielen. Mit Rücksicht auf den $SiO_2$-Gehalt und die Stabilität von Kieselsol-Präparaten sind etwa 300 $m^2/g$ $SiO_2$ optimal.

Eine weitere vorteilhafte Ausführungsform der Erfindung ist Gegenstand des Patentanspruchs 4. Der Vorteil dieser Ausführungsform besteht darin, daß das modifizierte Kieselsol pH-toleranter und bisweilen, aber nicht immer, auch wirksamer ist.

Der Erfolg des erfindungsgemäßen Verfahrens besteht, wie schon ausgeführt, in der Entfernung von filtrationshemmenden Stoffen aus der Würze und damit aus dem späteren Bier. Daneben bewirkt die Erfindung auch noch eine Farbaufhellung der Würze. In der gärenden Würze anwesender Kieselsolniederschlag beschleunigt die Gärung. Die Zugabe von Kieselsol zur Würze vor der Hefegabe ermöglicht eine weitgehende Entfernung des Kühltrubes mit dem Kieselsolsediment. Mit Kieselsol behandelte Würze bedingt eine beschleunigte Klärrung des Bieres nach der Hauptgärung und vermindert auch die Ausbildung der Kältetrübung bei Abkühlung des vergorenen Bieres auf etwa $0^oC$. Dies wirkt sich auch in einer erhöhten Kältestabilität des fertigen Endproduktes aus. Schließlich ist noch beobachtet worden, daß die Kieselsolbehandlung der Würze dazu führt, daß das vergorene Bier sich durch Zentrifugation sehr viel leichter und weitgehender klären läßt, als dies bei einem unbehandelten Bier gleicher Zusammensetzung der Fall ist.

- 11 -

Die Erfindung, ihre Durchführung, ihre Fortschritte
gegenüber den bekannten Verfahren und ihre über die
Verbesserung der Filtrationseigenschaften des Bieres
hinausgehenden Vorteile werden in den folgenden Beispielen dargestellt und erläutert.

- 12 -

Beispiel 1 (Vergleichsversuch)


Behandlung von Bier mit Kieselsol gemäß DOS 2 133 9o9


Gärkellerbier aus drei verschiedenen Münchner Brauereien
wird zunächst während 7 Tagen bei $10^{o}C$ endvergoren. Das
endvergorene Bier wird in 1-Liter-Flaschen abgefüllt und
3 Tage auf $0^{o}C$ gekühlt. Dann erfolgt der Zusatz von
Kieselsol. Es werden 1 g $SiO_2$ in Form einer Kieselsollösung
mit 10% $SiO_2$, mittlere Partikelgröße, 7 - 8 nm, Oberfläche ca. 300 $m^2$/g zugesetzt. Eine weitere Probe erhält die
gleiche Menge modifiziertes Kieselsol gemäß DOS 24 o88 96,
ebenfalls mittlere Teilchengröße, 7 - 8 nm, Oberfläche
300 $m^2$/g. Nach sorgfältigem Umschütteln bleiben die
Proben weitere 3 Tage bei $0^{o}C$ stehen. Danach werden von
dem Bier die oberen 800 ml abgehebert und untersucht. Die
Befunde finden sich in der Tabelle. Hierzu ist noch zu erläutern:


Klarheit:   Das abgeheberte Bier wird bei $0^{o}C$ nach EBC gemessen.


Sediment:   Das gebildete Sediment wird quantitativ bestimmt
und in Prozent der gesamten Biermenge ausgedrückt.


Vmax.nach Esser:   Wird ermittelt nach Monatsschrift für
Brauerei, 25, 145 (1972).


Filterkuchenfaktor:   Wird ermittelt nach Raible/Bantleon,
Monatsschrift für Brauerei, 21,277 (1968).


Kältetrübung:   Das bei der Bestimmung des Filterkuchenfaktors
aufgefangene Filtrat wird einem abgekürzten
Forciertest unterworfen, indem man das Bier
zunächst 24 Stunden bei $40^{o}C$ und dann 24 Stunden in Eis hält. Messung der Kältetrübung nach
EBC bei $0^{o}C$.

0088397

| | O-Bier | 1 g SiO$_2$ pro 1 Bier als Kieselsol | 1 g SiO$_2$ pro 1 Bier als modifiziertes Kieselsol |
|---|---|---|---|
| Klarheit vor der Filtration (EBC) | >15 | 11,0 | 6,7 |
| Sediment % | 1 | 5 | 6 |
| Vmax. n. Esser | 22 | 20 | 26 |
| Filterkuchenfaktor | 0,150 | 0,123 | 0,130 |
| Kältetrübung nach 24 h 40°C – 24 h Eis (EBC) | 10 | 4,2 | 3,5 |
| Klarheit vor der Filtration (EBC) | >15 | 4,0 | 2,9 |
| Sediment % | 1 | 8 | 8 |
| Vmax. n. Esser | 36 | 33 | 38 |
| Filterkuchenfaktor | 0,103 | 0,086 | 0,074 |
| Kältetrübung nach 24 h 40°C – 24 h Eis (EBC) | 8,1 | 3,1 | 2,0 |
| Klarheit vor der Filtration (EBC) | >15 | 1,9 | 1,6 |
| Sediment % | 1 | 7 | 7 |
| Vmax. n. Esser | 64 | 79 | 81 |
| Filterkuchenfaktor | 0,115 | 0,081 | 0,059 |
| Kältetrübung nach 24 h 40°C – 24 h Eis (EBC) | 12 | 8,7 | 5,4 |

Aus diesen Werten sieht man zunächst, daß das Kieselsol in der Tat eine sehr gute Klärwirkung auf das Bier ausübt. Während alle drei Vergleichsbiere vor der Filtration eine Trübung von weit über 15 EBC-Einheiten hatten, war diese Trübung nach der Kieselsolbehandlung abgesunken , herunter bis zu 1,6 – 1,9 EBC-Einheiten. Diese Biere waren also fast blank. Das Kieselsol-Sediment, das sich abscheidet, nimmt einen Raum ein von ca. 5 – 8 %.

Aus diesem Sediment muß aus Kostengründen das Bier z.B.
durch Separation gewonnen werden. Das ist technisch möglich.

An den Filtrationseigenschaften der Biere ändert sich aber
durch die Kieselsolbehandlung verhältnismäßig wenig. Bei
Bier 1 bewegt sich Vmax. nach Esser zwischen 22 und 26, bei
Bier 2 wird Vmax. von 36 auf 38 erhöht. Nur bei Bier 3 wirkt
sich die Kieselsolbehandlung etwas stärker aus, indem Vmax.
von 64 auf 81 erhöht wird.

Bei dem Filterkuchenfaktor, der bei einer Kleinfiltration
mit Kieselgur ermittelt wird, findet man auch nur eine geringfügige Veränderung (=Verbesserung). Nur bei Bier 3 wirkt
sich das modifizierte Kieselsol etwas deutlicher aus. Hier
wird der Filterkuchenfaktor auf etwa die Hälfte erniedrigt.

Insgesamt gesehen ist aber die Änderung in diesen beiden
Filtrationskriterien unbedeutend, jedenfalls viel zu wenig
ausgeprägt, als daß ein Brauer sich deswegen die Extraarbeit
der Biergewinnung aus dem Kieselsol-Sediment aufladen würde.

Die Kältetrübung schließlich wird bei den Kieselsolproben
erniedrigt, aber auch diese Wirkung ist nicht so stark ausgeprägt, als daß man das Verfahren praktisch anwenden würde.
Eine Erniedrigung der Kältetrübung von Bier in der Größenordnung der Versuchswerte ist ohne Schwierigkeiten z.B.
durch 30-50 g/hl Kieselsäuregel oder Kieselsäurehydrogel
als Dosage bei der Kieselgurfiltration zu erreichen und
damit einfacher und wesentlich wirtschaftlicher als auf dem
Weg über das Kieselsol. Vergl. dazu auch das Beispiel 8.

## Beispiel 2

### Würzebehandlung in der Wärme

Kochend heiße Ausschlagwürze erhält einen Zusatz von
100 g $SiO_2$ in Form einer 15 %igen Kieselsollösung, berechnete Oberfläche 250 qm/g $SiO_2$. Die Würze wird heiß gehalten. Nach einer halben Stunde wird die Würze von dem
Trub und dem Kieselsolniederschlag heiß abfiltriert. Die
klare Würze wird dann auf 15°C abgekühlt und 16 Stunden
stehengelassen.

Aussehen der Würze:

|         | Würze mit Kieselsol | Vergleichswürze ohne Kieselsol |
|---------|---------------------|--------------------------------|
| Trübung | 8 EBC               | ca. 25 EBC                     |
| Farbe   | 12,0 EBC            | 13,4 EBC                       |

Man sieht, daß in dem Niederschlag, den das Kieselsol in
der Würze bildet, kälteinstabiles Eiweiß enthalten ist
und mit dem Kieselsol aus der Würze entfernt wird. Wenn
die Würze dann auf 15 °C abgekühlt wird, enthält sie nunmehr einen verringerten Anteil an kälteunlöslichem Eiweiß,
so daß die Würze sich weniger trübt. Bemerkenswert ist
auch die Farbaufhellung.

**Beispiel 3**

| Kieselsol zu abgekühlter Ausschlagwürze |
| --- |

Ausschlagwürze wird heiß filtriert, sodann auf 15 °C abgekühlt. Dabei stellt sich eine starke Trübung ein, etwa
25 EBC. Diese Würze wird in vier Portionen zu 1 Liter aufgeteilt. Es werden zugegeben:

0

1 g $SiO_2$ als Kieselsol mit 250 qm Oberfl./g $SiO_2$

0,40 g " " " " " " " "

0,20 g " " " " " " " "

Sodann werden die Proben im Kühlschrank im Lauf einiger Stunden auf 4 °C abgekühlt und 2 Tage bei 4 °C stehengelassen.
Während dieser Zeit setzt sich der Kieselsoltrub ab. Man
hebert die überstehende Würze ab und untersucht sie. Außerdem wird der Kieselsoltrub zentrifugiert und sein Gewicht nach
der Zentrifugierung bestimmt.

| | 0 | 1,00 g $SiO_2$ | 0,40 g $SiO_2$ | 0,20 g $SiO_2$ |
| --- | --- | --- | --- | --- |
| Volumen des Sediments | – | 10 % | 4 % | 2 % |
| Gew. des Kieselsol-Niederschlages | – | ca. 10 g | ca. 5 g | – |
| Würzetrübung bei 4 °C | 22 EBC | 1 EBC | 2 EBC | 4 EBC |
| bei 0 °C | 40 EBC | 2 EBC | 4 EBC | 10,5 EBC |
| Zunahme an Kältetrübung | 18 EBC | 1 EBC | 2 EBC | 6,5 EBC |
| Filtrationsfähigkeit d. Würze bei 0 °C (Vmax. n. Esser) | 47 | 137 | 105 | 108 |
| Anthocyanogene mg/l | 69,4 | 55,6 | 63,0 | 68,0 |

Aus der Tabelle sieht man, daß sich je nach Kieselsoldosage mehr oder weniger Sediment bildet. Die Würze aus diesem Sediment kann durch Zentrifugation gewonnen werden. Im vorliegenden Fall wurde der Kieselsol-Niederschlag zentrifugiert und die geklärte Würze abgegossen. Das Gewicht des verbleibenden Niederschlages wurde bei 1 g $SiO_2$ pro Liter Würze zu etwa 10 g bestimmt. Dies sind weniger als 1 % echte Würzeverluste bei 1 g $SiO_2$/l Würze.

Die Würzebehandlung wirkt sich hinsichtlich der Klärung beachtlich aus. Man sieht, daß schon 0,2 G $SiO_2$ eine sehr klare Würze von nur 4 EBC-Einheiten Trübung erbringen, die höheren $SiO_2$-Dosagen ergeben noch sehr viel bessere Werte. Die Würze ist nahezu kältestabil, denn bei der Abkühlung auf 0 °C tritt nur eine geringfügige Erhöhung der Würzetrübung ein.

In der abgeheberten Würze wird nun auch Vmax. nach Esser bestimmt. Hier findet man eine Erhöhung auf das Freifache bzw. mehr als das Doppelte bei den niedrigeren $SiO_2$-Zusätzen. Der Anthocyanogengehalt der Würze wird ebenfalls reduziert und läßt eine Verbesserung der Kältestabilität des aus der Würze nach Vergärung entstehenden Bieres erwarten.

## Beispiel 4

### Kieselsol zur Würze bei Beginn der Gärung

Ausschlagwürze einer Münchner Brauerei wird mit Hefe angestellt. 12 Stunden später wird bei einer Probe Kieselsol zugegeben, so daß 50 g/hl $SiO_2$ zu der Würze kommen. Parallel dazu läuft die unbehandelte Würze. Beide Proben zu je 5 l Bier werden in einer 1 m hohen Glassäule bei 10 °C der Gärung überlassen. Nach 4 Tagen Gärzeit werden aus beiden Säulein je ca. 800 ml Bier entnommen. Dieses wird abzentrifugiert und dann untersucht.

Nach 4 Tagen Gärzeit ergeben sich folgende Werte:

|  | O-Bier | 50 g/hl $SiO_2$ |
| --- | --- | --- |
| Es | 3,1 | 2,8 |
| Kältetrübung nach 24 h Kühlen auf 0 °C | 25 EBC | 6,0 EBC |
| Vmax. n. Esser | 45 | 158 |
| Farbe | 9,25 EBC | 9,0 EBC |
| Isohumulone mg/l | 24,5 | 25,4 |

Nach 6 Gagen wird das Bier über der abgesetzten Hefe abgezogen und in 1-Liter-Portionen abgefüllt. Diese werden bei 0 °C aufbewahrt. Folgende Analysenwerte werden ermittelt:

|  | O-Bier | 50 g/hl $SiO_2$ |
| --- | --- | --- |
| Stammwürze | 11,08 | 11,10 |
| Alkohol Gew. % | 3,55 | 3,64 |
| Es | 2,54 | 2,35 |
| pH | 4,49 | 4,50 |
| Volumen des Hefesediments | 3,4 % | 4 % |

Nach eintägiger Lagerung bei 0 °C werden von den 1-Liter-Portionen die oberen 900 ml abgehebert und untersucht.

|  | O-Bier | 50 g/hl SiO$_2$ |
|---|---|---|
| Trübung bei 0 °C | ca. 30 EBC | 8,6 EBC |
| Vmax. n. Esser | 49 | 169 |
| Tilterkuchenfaktor | 0,245 | 0,125 |
| Kältetrübung des Bieres nach Kieselgurfiltration und 2 Warmtagen 40 °C | ca. 30 EBC | 4,3 EBC |

Aus dem vorliegenden Versuch erfährt man, daß die Zugabe von 50 g SiO$_2$ als Kieselsol bei Beginn der Hauptgärung ausreicht, um aus der gärenden Würze etwa 3/4 des kälteinstabilen Eiweißes zu entfernen (die Kältetrübung wird von 25 auf 6 EBC-Einheiten herabgesetzt). Die filtrationshemmenden Stoffe werden durch das Kieselsol in so starkem Maß adsor-biert, daß Vmax. nach Esser von 45 auf 158 angehoben, also mehr als verdreifacht wird.

Am Ende der Gärung, nach insgesamt 6 Gärtagen, hat das Bier mit Kieselsol einen scheinbaren Extrakt von Es = 2,35. Es ist also deutlich weiter vergoren als das Vergleichsbier mit Es 2,54. Das Volumen des Hefesediments beträgt beim Bier mit Kieselsol 4 % etwas mehr als beim O-Bier, wo es 3,4 % ausmacht. Nach der Hauptgärung klärt sich schon nach einer eintägigen Lagerung bei 0 °C das Kieselsol-Bier auf 8,6 EBC, das Vergleichsbier hat ca. 30 EBC. Die Filtrationseigenschaften werden sowohl nach Esser, als auch ausgedrückt durch den Filterkuchenfaktor beträchtlich verbessert, ebenso die Eiweißstabilität. Auf die Praxis übertragen läßt dies erwarten, daß die Zugabe von Kieselsol zu gärender Würze zu einem Bier führt, das nur einer ganz kurzen Lagerzeit zur weitgehenden Klärung bedarf und daß bei der abschließenden Kieselgurfiltration dieses Bieres eine minimale Zugabe von Kieselgel genügt, um das Bier völlig eiweißstabil zu machen.

## Beispiel 5

### Kieselsol beim Flotationsprozeß

Ausschlagwürze erhält nach dem Abkühlen, Lüften und Anstellen mit Hefe einen Zusatz von Kieselsol, so daß 0,5 g
$SiO_2$ auf 1 Liter Würze kommen. Diese Würze sowie eine Parallelprobe ohne Kieselsol-Zusatz, werden 24 Stunden bei 10°C
stehengelassen. Sodann wird der Schaum abgeschöpft und vom
abgesetzten Sediment abgehebert. Die Würze wird danach
in 1 m hohe Glassäulen von ca. 15 l Fassungsvermögen eingefüllt und 7 Tage bei 10°C vergoren. Anschließend wird
das Jungbier über der Hefe abgehebert, in 1-Liter-Protionen
abgefüllt und auf 0°C gekühlt. In den 1-Liter-Flaschen
wird die Klärung verfolgt.

### Trübung des Bieres (EBC-Einheiten)

| Beobachtungsdauer: | O-Bier | Bier mit Kieselsol |
|---|---|---|
| nach 1 Tag | über 15 | 7,3 |
| " 2 Tagen | über 15 | 4,0 |
| " 3 " | über 15 | 3,2 |
| " 5 " | über 15 | 2,8 |
| " 7 " | über 15 | 1,8 |
| " 9 " | über 15 | 1,7 |

Man sieht, daß das Bier mit Kieselsol sich sehr viel
schneller klärt und nach einer neuntägigen Lagerung bei
0°C nahezu ganz klar wird, während das Vergleichsbier zu
diesem Zeitpunkt immer noch stark getrübt ist.

Nach neun Tagen erhalten zwei Probeflaschen des O-Bieres
einen Zusatz von Kieselsol, so daß 0,5 g $SiO_2$ auf 1 Liter
Bier kommen. Nach weiteren vier Tagen bei 0°C werden
diese beiden Proben sowie je zwei Proben vom O-Bier ohne
jeden Kiselsol-Zusatz und zwei Proben mit Kieselsol beim
Flotationsprozeß weiter untersucht. Es ergibt sich (Mittelwerte der Doppelproben):

|  | O-Bier | Kieselsol bei der Flotation | Kieselsol nach der Lagerung |
|---|---|---|---|
| Trübung bei 0°C (EBC) | üb.15 | 1,6 | 4,2 |
| Vmax.n.Esser | 37 | 220 | 51 |
| Filterkuchenfaktor | 0,280 | 0,127 | 0,220 |
| Kältetrübung im filtr. Bier n.2 Warmtg. (EBC) | üb.15 | 6,0 | 5,0 |
| Stammwürze | 10,0 | 10,05 | 10,0 |
| Alkohol | 2,88 | 3,0 | 2,88 |

Man sieht aus dieser Tabelle, daß die Zugabe des Kieselsols
bei der Flotation sich hinsichtlich der Filtrationseigenschaften ungleich günstiger auswirkt als die Zugabe der
gleichen Menge des gleichen Kieselsols zum gelagerten Bier.
In dem einen Fall wird Vmax. von 37 auf 220 Einheiten erhöht, im anderen Fall von 37 nur auf 51. Das gleiche kommt
mit dem Filterkuchenfaktor zum Ausdruck. Bei der Bieranalyse zeigt sich wiederum, daß die Anwesenheit des Kieselsols
in der gärenden Würze die Gärung weiter treibt, als dies
ohne Kieselsol der Fall ist.

Das Resultat der Tabelle zeigt, daß die Zugabe von Kieselsol
am Ende der Lagerung an den Filtrationseigenschaften des
Bieres (Vmax. n. Esser und Filterkuchenfaktor) nur eine unwesentliche Verbesserung zur Folge hat, derentwegen man in der Praxis nicht die zusätzl. Arbeit für d. Aufbereitung des Kieselsol-Sediments in Kauf nehmen würde. Dagegen bewirkt Kieselsol bei Beginn der Gärung eine ungleich nachhaltigere Verbesserung dieser Filtrationseigenschaften. Die Tabelle zeigt auch, daß bei gleicher Gärzeit das Kieselsolbier weiter vergoren war als das Vergleichsbier. Die Stabilität der beiden Kieselsolbiere war etwa gleich. Das bedeutet, daß die Kieselsolzugabe zur Würze in dieser Hinsicht keine Nachteile bringt.

Beispiel 6

Verbesserung der Klärwirkung des Separators durch Kieselsol-Zugabe bei Gärungsbeginn.

In zwei Säulein von ca. 1 m Höhe wird Bierwürze zur Gärung angestellt. Eine der beiden Säulen erhält einen Zusatz von Kieselsol, so daß 0,5 g $SiO_2$ auf 1 Liter Würze kommen. Nach siebentägiger Gärung bei 0°C werden die beiden Jungbiere geschlaucht und in 1-Liter-Flaschen abgefüllt, die drei Tage auf 0°C gekühlt werden. Dann wird das Vergleichsbier und das Kieselsol-Bier in einer Becher-Zentrifuge zentrifugiert.

Diese Zentrifuge wird bei allen Versuchen in gleicher Weise in Gang gesetzt, so daß nach zwei Minuten die Höchstdrehzahl von 3800 U/Min. erreicht wird. Bei der ersten Probe wird danach die Zentrifuge sofort wieder abgeschaltet, so daß sie nach ca. 1 Min. wieder zum Stillstand kommt und das abzentrifugierte Bier abgegossen werden kann. Bei anderen Läufen wird die Höchstgeschwindigkeit fünf Minuten lang, zehn und zwanzig Minuten lang eingehalten. Auf diese Weise resultieren vom Kieselsol-Bier und vom Vergleichsbier je vier Proben, die unterschiedlich intensiv der Zentrifugalkraft

0088397

ausgesetzt waren. In diesen Bieren wird zunächst die
Klarheit nach der Zentrifugierung bestimmt. Sodann wird
das zentrifugierte Bier 24 Stunden auf 0°C abgekühlt. Man
mißt nochmals die Trübung. Anschließend wird Vmax. nach
Esser ermittelt. Es ergibt sich:

| Zentrifugieren bei 3 800 U/min | Klarheit nach der Zentrifug. | Klarheit nach 24 h bei 0°C | Vmax. n.Esser |
|---|---|---|---|
| **O-Bier** | | | |
| O Min. | 4,1 | ca. 15 | 36 |
| 5 " | 2,0 | 12,0 | 41 |
| 10 " | 1,8 | 11,5 | 45 |
| 20 " | 1,3 | 11,0 | 47 |
| **Kieselsol-Bier** | | | |
| O Min. | 2,9 | 3,4 | 132 |
| 5 " | 1,5 | 2,5 | 156 |
| 10 " | 1,3 | 2,0 | 190 |
| 20 " | 1,1 | 1,8 | 192 |

Aus der Tabelle sieht man, daß die Klärung des Bieres durch
Zentrifugierung bei dem Bier mit Kieselsol wesentlich leichter
vor sich geht als beim Vergleichsbier. Wenn man aus den Zahlen
der ersten Spalte z.B. interpoliert, wie lange man zentrifugieren
muß, um z.B. auf eine Klarheit von 1,5 EBC-Einheiten zu kommen,
dann findet man beim Kieselsol-Bier, daß dies nach 5 Min. der
Fall ist. Das Vergleichsbier hingegen benötigt etwa 15 Min.,
um auf die gleiche Klarheit zu kommen. Unter der Voraussetzung,
daß ein Durchflußseparator entsprechend ausgelegt ist, läßt
sich aus diesem Befund schließen, daß das Kieselsol-Bier
wesentlich klarer diesen Separator verläßt, als dies beim

Vergleichsbier der Fall ist, oder aber, daß man den gleichen Klarheitsgrad beim Kieselsol-Bier bei etwa dem dreifachen Durchsatz in der Zeiteinheit erreicht.

Daß das Kieselsol-Bier auch weniger kälteempfindlich und in seinen Filtrationseigenschaften dem O-Bier überlegen ist und wieviel dies ausmacht, ist schon aus anderen Beispielen bekannt.

Beispiel 7

Einfluß des pH-Wertes auf die Klärwirkung von Kieselsol

Helle Ausschlagwürze wird durch Filtration bei 80°C vom Heißtrub befreit. Danach wird auf Zimmertemperatur abgekühlt. Portionen von drei Litern dieser Würze werden durch Zugabe von NaOH, bzw. Schwefelsäure, auf die pH-Werte

<div align="center">

5,7

5,0

4,2

3,5

</div>

eingestellt. Alle Proben werden sodann 24 Stunden auf 0°C gekühlt und dann in drei Portionen zu 1 Liter unterteilt. Diese Portionen erhalten einen Zusatz von

- keinen Zusatz (Vergleichswürze)
- Kieselsol mit innerer Oberfläche 300 qm,
  0,5 g $SiO_2$/l
- Kieselsol mit innerer Oberfläche 300 qm,
  mit Al modifiziert nach DOS 24 08 896
  0,5 % $Al_2O_3$, 0,5 g $SiO_2$/l

Man verfolgt die Klärung. Nach drei Tagen werden von den Proben 500 ml abgehebert. Ein Teil davon wird sofort bei 0°C dem Test nach Esser unterworfen (Spalte Vmax.). Ein anderer Teil wird in der Becherzentrifuge 12 Minuten bei 3800 U/min zentrifugiert. Das Zentrifugat wird eine halbe Stunde wieder auf 0°C gekühlt und dann ebenfalls dem Test nach Esser unterworfen.

| | Trübung nach ... Tagen (EBC) | | | Vmax. | Vmax.nach Zentrifugierung |
|---|---|---|---|---|---|
| | 1 | 2 | 3 | | |
| **pH 5,7** | | | | | |
| O-Würze | üb. 15 | üb. 15 | üb. 15 | 33 | 49 |
| Kieselsol | 3,9 | 3,3 | 3,3 | 69 | 207 |
| Al-mod.Kieselsol | 3,8 | 3,3 | 3,3 | 78 | 212 |
| **pH 5,0** | | | | | |
| O-Würze | üb. 15 | üb. 15 | üb. 15 | 35 | 56 |
| Kieselsol | 5,6 | 4,2 | 3,9 | 61 | 214 |
| Al-mod.Kieselsol | 4,7 | 3,6 | 3,5 | 75 | 220 |
| **pH 4,2** | | | | | |
| O-Würze | üb. 15 | üb. 15 | üb. 15 | 17 | 24 |
| Kieselsol | üb. 15 | üb. 15 | üb. 15 | 35 | 196 |
| Al-mod.Kieselsol | 7,0 | 4,4 | 3,9 | 73 | 194 |
| **pH 3,5** | | | | | |
| O-Würze | üb. 15 | üb. 15 | üb. 15 | 14 | 19 |
| Kieselsol | üb. 15 | üb. 15 | üb. 15 | 39 | 210 |
| Al-mod.Kieselsol | 12,0 | 8,8 | 7,4 | 67 | 190 |

Aus der Tabelle sieht man, daß sich in der unbehandelten Würze bei allen vier eingestellten pH-Werten eine Kältetrübung von mehr als 15 EBC-Einheiten einstellt, die sich innerhalb der drei Beobachtungstage nicht sedimentiert. Die Zugabe des Kieselsols bewirkt, daß die Kältetrübung ziemlich schnell und weitgehend zu Boden gerissen wird. Dies erfolgt allerdings in Abhängigkeit vom pH. Je höher der pH-Wert, desto rascher erfolgt die Klärung und desto niedriger sind auch die erreichten Endwerte. Beim Kieselsol stellt man nun fest, daß schon bei pH 5 nicht mehr die gleich gute Wirkung eintritt wie bei pH 5,7. Bei pH 4,2 oder gar pH 3,5 kommt man auch nicht unter 15 EBC-Einheiten.

Das modifizierte Kieselsol dagegen wirkt bei pH 4,2 noch fast so gut wie bei pH 5 und 5,7 und auch bei pH 3,5 kann noch eine Wirkung beobachtet werden. Die klärende Wirkung des Kieselsols gegenüber Bierwürze (und wahrscheinlich auch Bier) ist also vom pH abhängig und erleidet im Bereich 4,2 und 5, d.h. also in dem Bereich, in dem sich das pH des Bieres normalerweise bewegt (pH 4,4 - 4,6) eine deutliche Wirkungsminderung. Das modifizierte Kieselsol ist pH-toleranter.

Hinsichtlich der Filtrierbarkeit n a c h Esser (Vmax.-Wert) kann man der Tabelle entnehmen, daß eine Würze umso schwerer filtrierbar wird, je niedriger der pH-Wert ist. Zwischen pH 5 und 4,2 tritt dabei spontan ein besonders starker Abfall ein.

Bei der mit Kieselsol behandelten Würze haben wir die gleiche Erscheinung. Der Vmax.-Wert ist zwar generell etwa doppelt so hoch wie bei der O-Würze entsprechenden pH's, aber auch hier haben wir zwischen pH 5 und 4,2 den starken Abfall.

Das modifizierte Sol wirkt bei pH 5,7 und pH 5,0 etwas besser als das Kieselsol. Es behält aber seine Klärwirkung gegenüber filtrationshemmenden Stoffen auch im pH-Bereich unter 4,2 in etwa bei.

Nach der Zentrifugierung zeigt sich bei den Würzen ohne Kieselsol eine geringe Verbesserung der Filtrierbarkeit, vor allem im pH-Bereich 5,7 und 5. Völlig unerwartet kommt aber die Beobachtung, daß die mit Kieselsol behandelten Würzen nach der Zentrifugierung Vmax.-Werte in der Größenordnung von 200 und darüber erreichen. Das ist etwa dreimal so viel wie vor der Zentrifugierung gemessen wurde, bei den Proben um pH 4,2 und 3,5 sogar rund sechsmal so viel. Die filtrationshemmenden Kolloide erleiden also durch die Zugabe des Kieselsols eine noch unbekannte Veränderung, die dazu führt, daß sie spezifisch schwerer und damit durch Zentrifugation leichter zu sedimentieren sind.

## Beispiel 8 (Vergleichsversuch)

### Kieselsolbehandlung von Bier gemäß DE-OS 21 33 906 im Vergleich zum vorliegenden Verfahren

Ausschlagwürze für helles Vollbier wird nach der Abtrennung des Heißtrubes gekühlt, belüftet und mit Hefe angestellt. Es werden zwei 1 m hohe Säulen mit je 5 l Inhalt mit dieser Würze befüllt. Eine dieser Säulen enthält den Zusatz von 0,25 g $SiO_2$ pro l in Form von Kieselsol, mit einer spezifischen Oberfläche von etwa 300 qm pro g $SiO_2$. Nach Ende der Hauptgärung wird das Bier über der Hefe abgezogen, in 1-Liter-Flaschen abgefüllt und diese auf 0°C gekühlt. Es werden sechs unterschiedliche Behandlungen des Bieres durchgeführt:

1. Vergleichsbier; bleibt 7 Tage bei 0°C stehen und wird dann Kieselgur-filtriert.

2. Wie 1.; bei der Kieselgurfiltration werden aber zusätzlich 50 g/hl Kieselgel zudosiert.

3. Bier ohne Kieselsol erhält nach zweitägiger Kühlung auf
0°C nachträglich 25 g $SiO_2$ als Kieselsol und bleibt dann
weitere fünf Tage bei 0°C stehen.

4. Wie 3., doch wird bei der abschließenden Kieselgurfiltration 50 g Kieselgel gegeben.

5. Bier mit Kieselsol-Zugabe bei der Gärung bleibt sieben
Tage bei 0°C stehen und wird dann Kieselgur-filtriert.

6. Wie 5., aber 50 g Kieselgel bei der abschließenden
Kieselgurfiltration.

Nach siebentägiger Lagerung bei 0°C wird die Klarheit der
sechs Biere gemessen, sodann hebert man 900 ml ab. Davon
dienen 200 ml für die Bestimmung von Vmax. nach Esser, mit
den restlichen 700 ml wird der Filterkuchenfaktor bestimmt.
Das Kieselgur-filtrierte Bier von diesem Test wird einem
Forciertest unterworfen, indem man es zwei Tage bei 40°C und
dann 24 Stunden in Eis hält. Die Resultate dieses Versuches finden sich in der Tabelle:

| | 1 | 2 | 3 | 4 | 5 | 6 |
|---|---|---|---|---|---|---|
| Klärung nach 7 Tagen (EBC) | >15,0 | >15,0 | 5,0 | 5,4 | 1,5 | 1,4 |
| Vmax.n.Esser | 53 | 52 | 82 | 84 | 247 | 256 |
| Filterkuchenfaktor | 0,240 | 0,300 | 0,190 | 0,214 | 0,124 | 0,177 |
| Forciertest (EBC) | über 15 | 8,8 | 8,0 | 4,1 | 10,2 | 5,8 |

Im vorliegenden Fall sieht man z.B., wie durch die Dosierung
von 50 g Kieselgel bei der Filtration die Eiweißstabilität des Bieres erhöht wird (Vergleich von Bier 1 und 2).
Bei Bier 3 wird das vorbekannte Verfahren der Kieselsolbehandlung von Bier gemäß DE-OS 21 33 906 praktiziert. Im
Vergleich zum 0-Bier 1 ergibt sich nur eine unwesentliche
Erhöhung der Filtrierbarkeit, ausgedrückt durch Vmax. und
den Filterkuchenfaktor. Eine Verbesserung der Kältestabilität
des Bieres tritt auch ein, aber wie schon oben im Text ausgeführt, kann man dies durch die Dosierung von 50 g Kieselgel
am Filter einfacher erreichen (Bier 2).

Bier 3 und Bier 5 haben beide 25 g $SiO_2$ als Sol erhalten.
Bier 5 schon bei Beginn der Gärung, Bier 3 erst bei Beginn
der Lagerung. Man sieht, daß hinsichtlich der Eiweißstabilität
größenordnungsmäßig etwa das gleiche Resultat gefunden wird.
Dagegen ist die Klärung und Filtrierbarkeit des erfindungsgemäß behandelten Bieres gegenüber dem Bier 3 weit verbessert.

0088397

## Patentansprüche

1. Verfahren zur Behandlung von Bier mit Kieselsol, d a -
   d u r c h  g e k e n n z e i c h n e t, daß man zur Verbesserung der Klärung und der Filtrations- sowie Separationseigenschaften des späteren Bieres das Kieselsol
   der Ausschlagwürze im heißen oder abgekühlten Zustand
   oder der Würze zu Beginn der Hauptgärung zugibt und
   die dadurch verursachte Ausflockung aus der Würze oder
   aus dem Jungbier abtrennt.

2. Verfahren nach Anspruch 1, dadurch gekennzeichnet, daß
   man den Kieselsolniederschlag mit den Trübungsstoffen
   der Würze oder des Bieres durch einen Zentrifugierungsprozeß abtrennt.

3. Verfahren nach Anspruch 1 oder 2, dadurch gekennzeichnet, daß das zugegebene Kieselsol eine spezifische Oberfläche zwischen 200 bis 400 $m^2$/g $SiO_2$ besitzt.

4. Verfahren nach einem der Ansprüche 1 bis 3, dadurch gekennzeichnet, daß mit Aluminiumverbindungen modifiziertes Kieselsol zugegeben wird.